# EUROPÄISCHE PATENTSCHRIFT

(11) **EP 4 509 331 B1**
(45) Veröffentlichungstag und Bekanntmachung des Hinweises auf die Patenterteilung: **09.12.2026**
(21) Anmeldenummer: 24192899.3
(22) Anmeldetag: 05.08.2024
(51) Int. Cl.: B60C 19/08, B60C 9/20, B60C 9/02, B60C 9/18

(54) **FAHRZEUGLUFTREIFEN MIT VERBESSERTEN LEITFÄHIGKEITSEIGENSCHAFTEN UND VERFAHREN ZUR HERSTELLUNG**
PNEUMATIC VEHICLE TIRE WITH IMPROVED ELECTRICAL CONDUCTIVITY PROPERTIES AND METHOD OF MANUFACTURING
PNEUMATIQUE DE VÉHICULE AVEC CONDUCTIVITÉ AMELIORÉE ET PROCÉDÉ DE FABRICATION

(30) Priorität: 18.08.2023 DE 102023207949
(43) Veröffentlichungstag der Anmeldung: 19.02.2025
(73) Patentinhaber: Continental Reifen Deutschland GmbH, 30175 Hannover (DE)
(72) Erfinder: Knull, Stephan, 30175 Hannover (DE)
(74) Vertreter: Continental Corporation

(56) Entgegenhaltungen:
- EP-A1- 3 988 347
- EP-B1- 0 995 618
- DE-A1- 102015 225 601
- JP-A- 2023 089 367

## Beschreibung

Die Erfindung betrifft einen Fahrzeugluftreifen, insbesondere einen Fahrzeugluftreifen mit verbesserten Leitfähigkeitseigenschaften, und ein Verfahren zur Herstellung eines Fahrzeugluftreifen.

Eine wesentliche Komponente moderner Fahrzeugluftreifen, die in vielen Fällen maßgeblich für die Leistungscharakteristika dieser Produkte verantwortlich ist, ist der Laufstreifen. Heutzutage bestehen Laufstreifen dabei zumeist aus mehreren verschiedenen Komponenten, insbesondere verschiedenen Gummiwerkstoffen, welche durch Vulkanisation aus vulkanisierbaren Kautschukmischungen erhalten werden können. Die meisten Laufstreifen, insbesondere im PKW- und LKW-Bereich, umfassen einen oder mehrere Gummiwerkstoffe, die im späteren Einsatz Kontakt mit der Fahrbahn haben sollen und hinsichtlich ihrer Eigenschaften für diesen Zweck optimiert werden. Diese quasi als Decklage fungierende Schicht wird dabei aus einer vulkanisierbaren Kautschukmischung hergestellt, die zuweilen auch als "Cap-Mischung" bezeichnet wird, die häufig große Anteile von nicht elektrisch leitenden Füllstoffen, wie beispielsweise gefälltem Siliciumdioxid umfasst.

Dem Fachmann ist bewusst, dass ein Laufstreifen für die überwiegende Zahl von Anwendungen aus technischen und/oder regulatorischen Gründen in seiner Gesamtheit eine gewisse elektrische Leitfähigkeit aufweisen muss, die eine unerwünschte statische Aufladung verhindern kann. In vielen Fällen verfügt jedoch der Gummiwerkstoff der Decklage nicht über eine hinreichende elektrische Leitfähigkeit, um dies zu gewährleisten.

Daher wird die elektrische Leitfähigkeit des gesamten Laufstreifens im Stand der Technik zumeist durch die Base-Mischung der darunter liegenden Grundlage realisiert, die eine gesteigerte elektrische Leitfähigkeit aufweist, insbesondere in Folge eines hohen Rußgehaltes. Hierzu wird beispielsweise ein Materialstrang aus der Grundlage bis zur Oberseite des Laufstreifens geführt, welcher dadurch eine elektrisch leitfähige Verbindung zwischen der Oberfläche des Laufstreifens und der Grundlage herstellt. Die entsprechende Struktur wird dabei auch als "Carbon Center Beam" (CCB) bezeichnet.

Durch den Einsatz eines CCB und vergleichbarer Maßnahmen lässt sich die zuweilen unzureichende elektrische Leitfähigkeit des Laufstreifens heutzutage meist gut kompensieren. Hierbei wird ausgenutzt, dass die unterhalb des Laufstreifens angeordneten Lagen, insbesondere das Gürtelpaket, welches neben einer oder mehrerer Gürtellagen zumeist auch eine Spulbandage umfasst, häufig ausreichend leitfähig ist, um die elektrostatische Aufladung zu verhindern, zumindest bei den aus dem Stand der Technik bekannten Fahrzeugreifen. Allerdings besteht im Zuge der angestrebten weiteren Optimierung der Rolleigenschaften moderner Fahrzeugluftreifen ein grundsätzliches Interesse daran, auch die Zusammensetzung der im Gürtelpaket eingesetzten Gummiwerkstoffe weiter hinsichtlich der Rollwiderstandseigenschaften zu optimieren. Diese Optimierungsbemühungen betreffen hierbei insbesondere den Gummiwerkstoff der Spulbandage. Mit dieser Optimierung kann jedoch einhergehen, dass auch die elektrische Leitfähigkeit des Gürtelpakets, insbesondere der Spulbandage, weiter verringert wird. In diesen Fällen besteht die Gefahr, dass eine Kontaktierung der Fahrbahnoberfläche durch einen CCB, welcher im Reifeninneren auf das Gürtelpaket bzw. dessen Spulbandage trifft, keine hinreichende elektrische Leitfähigkeit des Fahrzeugluftreifens mehr sicherstellen kann.

Zur Kompensation dieses Problems und zur Steigerung der Einstellungsmöglichkeiten der physikalisch-chemischen Eigenschaften der in den Gürtelpaketen eingesetzten Lagen, insbesondere der Spulbandage, wurden Konzepte erarbeitet, die auf den Einsatz von elektrisch leitfähigen Fäden setzen, welche eine Verbesserung der elektrischen Leitfähigkeit bewirken sollen. Aus der DE 10 2010 037 004 A1 sind beispielsweise Fahrzeugluftreifen bekannt, bei denen einzelne Bauteile der Fahrzeugluftreifen mit elektrisch leitfähigen Fäden umwickelt werden, was jedoch mit zusätzlichen Prozessschritten bei der Herstellung der Vorprodukte verbunden ist und somit unter Aspekten der Zeit- und Kosteneffizienz zuweilen als nachteilig empfunden wird. Aus der DE 10 2015 225601 A1, EP 3 988 347 A1, JP 2023 089367 A und der EP 0 995 618 B1 sind weitere Fahrzeugreifen sowie Verfahren zu ihrer Herstellung bekannt.

Nach Einschätzung der Erfinder birgt der aus dem Stand der Technik bekannte Einsatz von elektrisch leitfähigen Fäden zur Überbrückung eines potentiell nicht hinreichend leitfähigen Gürtelpakets in einem Fahrzeugluftreifen zudem inhärent die Gefahr, dass die eingebrachten elektrisch leitfähigen Fäden zu Schwachstellen im Reifenverbund führen, und/oder bei der Einbringung mit einem erheblichen zusätzlichen apparativen Aufwand verbunden sind.

Es war die primäre Aufgabe der vorliegenden Erfindung, die Nachteile des Standes der Technik auszuräumen oder zumindest zu verringern.

Insbesondere war es die Aufgabe der vorliegenden Erfindung, einen Fahrzeugluftreifen anzugeben, welcher über vorteilhafte elektrische Leitfähigkeitseigenschaften verfügt und einer unerwünschten elektrostatischen Aufladung zuverlässig vorbeugen kann.

Insoweit war es eine wichtige Aufgabe der vorliegenden Erfindung, dass die vorteilhaften elektrischen Leitfähigkeitseigenschaften des Fahrzeugluftreifens auch dann gegeben sein sollten, wenn die Spulbandage des Fahrzeugluftreifens zur Optimierung der sonstigen Eigenschaften des Fahrzeugreifens mit einer reduzierten elektrischen Leitfähigkeit ausgeführt wird, sodass es eine Aufgabe der vorliegenden Erfindung war, die Zusammensetzungsbreite der unter Leitfähigkeitserwägungen für den Gummiwerkstoff der Spulbandage zugänglichen Mischungen zu erweitern, und insoweit das Optimierungspotential hinsichtlich der sonstigen Eigenschaften des Fahrzeugluftreifens, insbesondere hinsichtlich des Rollwiderstandes, zu vergrößern.

Es war eine Aufgabe der vorliegenden Erfindung, dass der anzugebende Fahrzeugluftreifen in zeit- und/oder kosteneffizienter Art und Weise herstellbar sein sollte, wobei es eine wünschenswerte Vorgabe war, dass die Herstellung des Fahrzeugluftreifens möglichst weitgehend auf solchen Anlagen und Vorrichtungen erfolgen können sollte, die im Bereich der Reifenfertigung bereits heute zum Einsatz kommen, idealerweise nur mit geringen Modifikationen.

Es war eine weitere Aufgabe der vorliegenden Erfindung, dass der anzugebende Fahrzeugluftreifen und das zu seiner Herstellung verwendete Verfahren so ausgestaltet sein sollten, dass die zur Steigerung der Leitfähigkeit in den Fahrzeugluftreifen eingebrachten Komponenten präzise positioniert werden können. Insoweit war es eine weitere Aufgabe der vorliegenden Erfindung, dass die zur Steigerung der Leitfähigkeit eingebrachten Komponenten im Fahrzeugluftreifen möglichst gut fixiert sein sollten, sodass Fahrzeugluftreifen erhalten werden können, welche auch für mechanisch anspruchsvolle Hochleistungsanwendungen geeignet sind, ohne dass es zu unerwünschten Schwachstellen im Verbund kommt.

Die Erfinder der vorliegenden Erfindung haben nunmehr gefunden, dass sich die vorstehend beschriebenen Aufgaben lösen lassen, wenn zur Verbesserung der elektrischen Leitfähigkeit ein elektrisch leitfähiger Faden in den Fahrzeugluftreifen eingebracht wird, sofern dieser bezogen auf die radiale Richtung teilweise oberhalb und teilweise unterhalb der Spulbandage verläuft und sich entsprechend an zumindest einer Stelle durch die Spulbandage hindurch erstreckt, wie es in den Ansprüchen definiert ist. Ein entsprechender Fahrzeugluftreifen lässt sich dabei erfindungsgemäß dadurch herstellen, dass der elektrisch leitfähige Faden beim Aufbringen der Spulbandage zumindest teilweise zeitgleich mit dem entsprechenden Spulmaterial gespult wird, sodass der elektrisch leitfähige Faden teilweise unterhalb des aufgebrachten Spulmaterials von diesem bedeckt wird und teilweise oberhalb des Spulmaterials aufgelegt wird, während der elektrisch leitfähige Faden zwischen zwei Wicklungen des Spulmaterials durch die Spulbandage hindurch geführt wird, wie es ebenfalls in den Ansprüchen definiert ist.

In vorteilhafter Weise werden hierdurch leistungsfähige Fahrzeugluftreifen erhalten, bei denen eine hinreichende elektrische Leitfähigkeit durch die Spulbandage hindurch auch dann sichergestellt ist, wenn der in der Spulbandage eingesetzte Gummiwerkstoff eine niedrige elektrische Leitfähigkeit aufweist. Die spezifische Anordnung des elektrisch leitfähigen Fadens im erfindungsgemäßen Fahrzeugluftreifen sorgt dabei für eine zuverlässige und sichere Positionierung des elektrisch leitfähigen Fadens im Inneren des Fahrzeugluftreifens, sodass dem unerwünschten Auftreten von Schwachstellen im Verbund in vorteilhafter Weise entgegengewirkt werden kann. Das erfindungsgemäße Verfahren zum Herstellen der erfindungsgemäßen Fahrzeugluftreifen ist dabei besonders zeit- und kosteneffizient und erfordert lediglich minimale konstruktive Änderungen an den zur Herstellung des Reifens normalerweise eingesetzten Vorrichtungen, wobei das simultane Abspulen des Spulmaterials und des elektrisch leitfähigen Fadens in Folge der dadurch erzeugten Überlappung der Materialien zu einer vorteilhaften Gesamtverbundfestigkeit beiträgt und insbesondere auch verhindert, dass der durch das aufgebrachte Spulmaterial fixierte elektrisch leitfähige Faden bei nachfolgenden Verarbeitungsschritten in unerwünschter Weise verrutscht.

Die vorstehend genannten Aufgaben werden entsprechend durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Die Erfindung betrifft insbesondere einen Fahrzeugluftreifen, umfassend:
i) eine Reifenkarkasse, umfassend zumindest einen in einem ersten Gummiwerkstoff eingebetteten ersten Festigkeitsträger,
ii) eine relativ zur Reifenkarkasse radial außenliegende Gürtellage, umfassend zumindest einen in einem zweiten Gummiwerkstoff eingebetteten zweiten Festigkeitsträger,
iii) eine relativ zur Gürtellage radial außenliegende Spulbandage, umfassend zumindest einen in einem dritten Gummiwerkstoff eingebetteten dritten Festigkeitsträger,
iv) einen relativ zur Spulbandage radial außenliegenden Laufstreifen, und v) einen elektrisch leitfähigen Faden,
wobei der elektrisch leitfähige Faden abschnittsweise die radial innenliegende Oberfläche der Spulbandage kontaktiert und abschnittsweise die radial außenliegende Oberfläche der Spulbandage kontaktiert, wobei sich der elektrisch leitfähige Faden zumindest an einer Stelle durch die Spulbandage hindurch erstreckt.

Der grundsätzliche Aufbau von Fahrzeugluftreifen ist dem Fachmann bekannt. Beispielhaft ist ein erfindungsgemäßer Fahrzeugluftreifen, wobei der Fahrzeugluftreifen ein PKW-Reifen oder ein LKW-Reifen ist.

Zum Verständnis der vorliegenden Erfindung ist es zielführend, zunächst die für die Definition der vorliegenden Erfindung notwendigen Bestandteile des Fahrzeugluftreifens zu erläutern.

In Übereinstimmung mit dem üblichen Aufbau von Fahrzeugluftreifen umfasst auch der erfindungsgemäße Fahrzeugluftreifen eine Reifenkarkasse. Diese Reifenkarkasse besteht aus einer oder mehreren Karkasslagen, in welchen Festigkeitsträgern in einem Gummiwerkstoff, welcher auch als Gummierung bezeichnet wird, eingebettet sind. Die Reifenkarkasse und der erste Gummiwerkstoff werden dabei in Übereinstimmung mit dem üblichen Vorgehen aus einem Reifenkarkassenrohling durch Vulkanisation erhalten, indem die vulkanisierbare Kautschukmischung, in der die Festigkeitsträger eingebettet sind, im Zuge der Vulkanisation in den ersten Gummiwerkstoff überführt werden. Mit anderen Worten handelt es sich um einen erfindungsgemäßen Fahrzeugluftreifen, wobei der erste Gummiwerkstoff herstellbar ist durch Vulkanisation einer ersten vulkanisierbaren Kautschukmischung. Die Reifenkarkasse umfasst eine Vielzahl an ersten Festigkeitsträgern. Bevorzugt ist dabei ein nicht erfindungsgemäßer Fahrzeugluftreifen, wobei die ersten Festigkeitsträger ausgewählt sind aus der Gruppe bestehend aus textilen Festigkeitsträgern.

In radialer Richtung oberhalb der Reifenkarkasse, d.h. in radialer Richtung weiter außen, ist zumindest eine Gürtellage angeordnet. Auch die Gürtellage umfasst in einem Gummiwerkstoff eingebettete Festigkeitsträger, wobei die Festigkeitsträger häufig metallische Festigkeitsträger sind. Während die Festigkeitsträger der Reifenkarkasse häufig im Wesentlichen entlang der radialen Richtung verlaufen, verlaufen die Festigkeitsträger der Gürtellage zumeist eher in Umfangsrichtung, mit der sie bevorzugt einen Winkel im Bereich von 18° bis 45° einschließen.

Mit anderen Worten handelt es sich um einen erfindungsgemäßen Fahrzeugluftreifen, wobei der zweite Gummiwerkstoff herstellbar ist durch Vulkanisation einer zweiten vulkanisierbaren Kautschukmischung. Für die weit überwiegenden Zahl der Fälle relevant ist ein nicht erfindungsgemäßer Fahrzeugluftreifen, wobei die Gürtellage eine Vielzahl an zweiten Festigkeitsträgern umfasst. Bevorzugt ist dabei ein nicht erfindungsgemäßer Fahrzeugluftreifen, wobei die zweiten Festigkeitsträger ausgewählt sind aus der Gruppe bestehend aus metallischen Festigkeitsträgern. Bevorzugt ist zusätzlich oder alternativ ein nicht erfindungsgemäßer Fahrzeugluftreifen wobei der Fahrzeugluftreifen zwei oder mehr, bevorzugt vier oder mehr, Gürtellagen umfasst, die in radialer Richtung übereinander angeordnet sind.

In radialer Richtung oberhalb sowohl der Gürtellage als auch der Reifenkarkasse ist der für den Kontakt mit der Fahrbahn vorgesehene Laufstreifen angeordnet, welcher in radialer Richtung regelmäßig den äußersten Teil des Fahrzeugluftreifens bildet. Insbesondere wenn der für den Fahrbahnkontakt vorgesehene Gummiwerkstoff eine schlechte elektrische Leitfähigkeit aufweist, ist es zielführend, dass auf den Einsatz eines CCB gesetzt wird. Bevorzugt ist entsprechend ein nicht erfindungsgemäßer Fahrzeugluftreifen, wobei der Laufstreifen einen vierten Gummiwerkstoff und einen fünften Gummiwerkstoff umfasst, wobei die elektrische Leitfähigkeit des vierten Gummiwerkstoffs bei 20 °C größer ist als die elektrische Leitfähigkeit des fünften Gummiwerkstoffs bei 20 °C, bevorzugt um den Faktor 10 oder mehr, besonders bevorzugt um den Faktor 100 oder mehr, ganz besonders bevorzugt um den Faktor 1000 oder mehr, wobei die radial außenliegende Oberfläche des Laufstreifens zu 90 % oder mehr, bevorzugt zu 95 % oder mehr, besonders bevorzugt zu 98 % oder mehr, durch den fünften Gummiwerkstoff gebildet wird, wobei sich der vierte Gummiwerkstoff von der radial innenliegenden Seite des Laufstreifens durch den fünften Gummiwerkstoff hindurch bis zur radial außenliegende Oberfläche des Laufstreifens erstreckt. Besonders bevorzugt ist in diesem Fall ein nicht erfindungsgemäßer Fahrzeugluftreifen wobei der elektrisch leitfähige Faden den vierten Gummiwerkstoff kontaktiert.

Zwischen den Gürtellagen und dem Laufstreifen ist zudem eine Spulbandage angeordnet. Entsprechende Spulbandagen sind dem Fachmann aus dem Stand der Technik bekannt und verdanken ihren Namen dem Umstand, dass diese im Gegensatz zu vielen anderen Reifenbestandteilen nicht als lagenförmiges Material aufgelegt werden, sondern auf der Reifenaufbautrommel zumeist durch das Aufspulen eines vergleichsweise schmalen, bandförmigen Spulmaterials sukzessive aufgebaut werden. Nach der Vulkanisation des Spulmaterials, bzw. dessen vulkanisierbarer Kautschukmischung, umfasst auch die Spulbandage einen Gummiwerkstoff mit darin eingebetteten Festigkeitsträgern. Mit anderen Worten handelt es sich um einen erfindungsgemäßen Fahrzeugluftreifen, wobei der dritte Gummiwerkstoff herstellbar ist durch Vulkanisation einer dritten vulkanisierbaren Kautschukmischung. Bevorzugt ist ein nicht erfindungsgemäßer Fahrzeugluftreifen, wobei die Spulbandage drei oder mehr, bevorzugt fünf oder mehr, besonders bevorzugt sieben oder mehr, ganz besonders bevorzugt neun oder mehr, dritte Festigkeitsträger umfasst. Bevorzugt ist zusätzlich oder alternativ ein erfindungsgemäßer Fahrzeugluftreifen, wobei der dritte Festigkeitsträger ausgewählt ist aus der Gruppe bestehend aus textilen Festigkeitsträgern. Besonders bevorzugt ist ein erfindungsgemäßer Fahrzeugluftreifen, wobei der dritten Festigkeitsträger einen Kunststoff umfasst oder daraus besteht, wobei der Kunststoff bevorzugt ausgewählt ist aus der Gruppe bestehend aus Polyestern, Polyamiden und Mischungen dieser Kunststoffe, besonders bevorzugt ausgewählt ist aus der Gruppe bestehend aus Polyethylenterephthalat, Polycaprolactam und Polyhexamethylenadipamid. Bevorzugt ist zusätzlich oder alternativ ein erfindungsgemäßer Fahrzeugluftreifen, wobei der Fahrzeugluftreifen genau eine Spulbandage umfasst.

Zumindest prinzipiell ist es möglich, dass zwischen den vorstehend beschriebenen Reifenkomponenten, d. h. der Reifenkarkasse, der oder den Gürtellagen, der Spulbandage und dem Laufstreifen weitere Lagen und/oder Bauteile angeordnet sein können. Mit Blick auf einen gewichtssparenden Aufbau ist es jedoch in vielen Fällen bevorzugt, auf solche zusätzlichen Lagen und/oder Bauteile zu verzichten, in welchem Fall sich die vorstehend definierten Lagen und Bauteile unmittelbar kontaktieren. Bevorzugt ist entsprechend ein erfindungsgemäßer Fahrzeugluftreifen, wobei die Gürtellage bzw. die untere der Gürtellagen die Reifenkarkasse kontaktiert. Bevorzugt ist zusätzlich oder alterativ ein erfindungsgemäßer Fahrzeugluftreifen, wobei die Gürtellage bzw. die obere der Gürtellagen die Spulbandage und/oder den elektrisch leitfähigen Faden, bevorzugt die Spulbandage und den elektrisch leitfähigen Faden, kontaktiert. Bevorzugt ist zusätzlich oder alterativ auch ein erfindungsgemäßer Fahrzeugluftreifen, wobei die Spulbandage den Laufstreifen kontaktiert.

Neben den vorstehend bezeichneten Bestandteilen kann der Fahrzeugluftreifen weitere übliche Bestandteile umfassen, insbesondere zur Ausgestaltung der Reifenwülste, zur Abdeckung der Seitenwände und zur Gewährleistung der notwendigen Luftdichtigkeit. Das Vorliegen der entsprechenden Reifenbestandteile entspricht dabei dem aus dem Stand der Technik bekannten Aufbau und kann vom Fachmann auf die jeweiligen Anwendungsbedürfnisse abgestimmt werden.

In diesem Fall handelt es sich um einen nicht erfindungsgemäßen Fahrzeugluftreifen, wobei der Fahrzeugluftreifen zusätzlich umfasst:
vi) zwei jeweils in einem Wulstbereich der Reifenkarkasse angeordnete Wulstelemente, und/oder
vii) zwei jeweils auf den Seiten des Fahrzeugluftreifens angeordnete Seitenwandbauteile, und/oder
viii) eine auf der radial innenliegenden Seite der Reifenkarkasse angeordnete Reifeninnenschicht.

Die vorteilhafte elektrische Leitfähigkeit des Fahrzeugreifen wird im Rahmen der vorliegenden Erfindung durch den Einsatz eines elektrisch leitfähigen Fadens bewirkt. Die elektrische Leitfähigkeit des Fadens kann dabei daraus resultieren, dass er ein elektrisch leitfähiges Material umfasst oder aus einem solchen besteht, wobei beispielsweise denkbar ist, dass ein elektrisch leitfähiges Filament, beispielsweise ein metallisches Filament, mit einem inhärent schlecht elektrisch leitfähigen Filament, beispielsweise aus Kunststoff, kombiniert wird. Alternativ ist es auch möglich, die gewünschte Leitfähigkeit durch die Beschichtung eines inhärent schlecht leitfähigen Filamentes mit einem leitfähigen Material und/oder mittels einer entsprechende Imprägnierung sicherzustellen. Für das leitfähige Material kommen dabei insbesondere Ruße in Frage. Geeignete Materialien für entsprechende elektrisch leitfähige Fäden sind aus dem Stand der Technik bekannt, beispielsweise in der DE 10 2013 111 338 A1, wobei der Fachmann aus dem im Stand der Technik bekannten elektrisch leitfähigen Fäden zwanglos diejenigen auswählt, die hinsichtlich ihrer physikalisch-chemischen sowie mechanischen Eigenschaften zu dem von ihm angestrebten Verwendungszweck am besten passen. Bevorzugt ist für viele Anwendungen ein erfindungsgemäßer Fahrzeugluftreifen, wobei der elektrisch leitfähige Faden ein Garn umfasst, bevorzugt ein Garn mit zwei oder mehr Filamenten. Bevorzugt ist zusätzlich oder alternativ ein erfindungsgemäßer Fahrzeugluftreifen, wobei der elektrisch leitfähige Faden eine Feinheit im Bereich von 50 bis 500 dtex, bevorzugt im Bereich von 75 bis 450 dtex, besonders bevorzugt im Bereich von 100 bis 400 dtex, aufweist.

Bevorzugt ist ein nicht erfindungsgemäßer Fahrzeugluftreifen, wobei der elektrisch leitfähige Faden zumindest ein metallisches Filament umfasst.

Bevorzugt ist zusätzlich oder alternativ ein nicht erfindungsgemäßer Fahrzeugluftreifen, wobei der elektrisch leitfähige Faden zumindest ein textiles Filament umfasst, wobei der elektrisch leitfähige Faden bevorzugt aus zumindest einem textilen Filament besteht. Bevorzugt ist dabei ein nicht erfindungsgemäßer Fahrzeugluftreifen, wobei das textile Filament ein Baumwollfilament ist. Bevorzugt ist alternativ ein erfindungsgemäßer Fahrzeugluftreifen, wobei das textile Filament einen Kunststoff umfasst oder aus diesem besteht, wobei der Kunststoff bevorzugt ausgewählt ist aus der Gruppe bestehend aus Polyestern, Polyamiden und Mischungen dieser Kunststoffe, besonders bevorzugt ausgewählt ist aus der Gruppe bestehend aus Polyethylenterephthalat, Polycaprolactam und Polyhexamethylenadipamid.

Bevorzugt ist insbesondere für textile Fäden ein nicht erfindungsgemäßer Fahrzeugluftreifen, wobei der elektrisch leitfähige Faden eine Beschichtung mit einem elektrisch leitfähigen Material, bevorzugt eine elektrisch leitfähige Haftimprägnierung, umfasst und/oder mit einem elektrisch leitfähigen Material imprägniert ist. Besonders bevorzugt ist ein nicht erfindungsgemäßer Fahrzeugluftreifen, wobei das elektrisch leitfähige Material einen spezifischen elektrischen Widerstand von 1000 Ω mm²/m oder weniger, bevorzugt bei 100 Ω mm²/m oder weniger, besonders bevorzugt bei 10 Ω mm²/m oder weniger, aufweist. Ganz besonders bevorzugt ist ein erfindungsgemäßer Fahrzeugluftreifen, wobei das elektrisch leitfähige Material einen oder mehrere Ruße umfasst.

Ob es sich bei einem Faden um einen elektrisch leitfähigen Faden handelt, ist für den Fachmann zwanglos festzustellen, wobei die Bewertung einer guten elektrischen Leitfähigkeit im Vergleich zu typischen Gummiwerkstoffen erfolgt. In Übereinstimmung mit dem fachmännischen Verständnis liegen die elektrischen Widerstände im Bereich der Gummiprodukte selbst für relativ gut leitende Materialien deutlich über denen, von beispielsweise Metallen. Insoweit ist der spezifische Gesamtwiderstand des elektrisch leitfähigen Fadens, welches in großen Teilen beispielsweise aus einem dielektrischen Träger bestehen kann, für manche Aufbauten des elektrisch leitfähigen Fadens kein geeigneter Parameter zur Quantifizierung der elektrischen Leitfähigkeit, da die für den erfindungsgemäßen Erfolg notwendige elektrische Ableitung beispielsweise durch ein einzelnes metallisches Filament und/oder eine dünne Beschichtung erreicht werden kann, auch wenn große Teile des elektrisch leitfähigen Fadens aus einem sehr schlecht leitfähigen Material bestehen.

Die Erfinder schlagen vor, dass der elektrisch leitfähige Faden bevorzugt bei 20 °C und einer Luftfeuchtigkeit von 55 % einen elektrischen Widerstand von 7,5 x 10⁶ Ohm / 30 cm oder weniger, bevorzugt 6,5 x 10⁶ Ohm / 30 cm oder weniger, aufweisen sollte.

Ein Reifen kann in jedem Fall als ausreichend elektrisch leitfähig gelten, wenn sein Ableitwiderstand höchstens 10¹⁰ Ohm beträgt. Bevorzugt ist der Ableitwiderstand 10⁸ Ohm oder weniger, bevorzugt 10⁶ Ohm oder weniger.

Der elektrische Ableitwiderstand eines Fahrzeugluftreifens kann gemäß ISO 16392:2017 bestimmt werden.

Mit Blick auf die angestrebte Wirkung einer elektrischen Überbrückung einer unzureichend leitfähigen Spulbandage kann die Konzeption des elektrisch leitfähigen Fadens darüber ausgedrückt werden, dass entlang zumindest eines Leiterpfades die elektrische Leitfähigkeit größer ist als die des dritten Gummiwerkstoffs, d. h. des in der Spulbandage vorliegenden Gummimaterials, wobei dieser Leitfähigkeitspfad bevorzugt durch ein metallisches Filament bzw. die Beschichtung mit einem elektrisch leitfähigen Material bereitgestellt wird. Bevorzugt ist entsprechend ein erfindungsgemäßer Fahrzeugluftreifen, wobei die elektrische Leitfähigkeit des elektrisch leitfähigen Materials und/oder des metallischen Filaments größer ist als die elektrische Leitfähigkeit des dritten Gummiwerkstoffs.

Besonders bevorzugt ist ein nicht erfindungsgemäßer Fahrzeugluftreifen, wobei die elektrische Leitfähigkeit des elektrisch leitfähigen Fadens bei 20 °C entlang zumindest eines Leitungspfades um den Faktor 10 oder mehr, bevorzugt um den Faktor 100 oder mehr, besonders bevorzugt um den Faktor 1000 oder mehr, größer ist als die elektrische Leitfähigkeit des dritten Gummiwerkstoffs bei 20 °C.

Zumindest theoretisch ist es denkbar, die spezifische Anordnung in nicht erfindungsgemäßen Fahrzeugluftreifen durch den Einsatz von zwei oder mehr elektrisch leitfähigen Fäden zu realisieren, welche im Herstellungsverfahren des Fahrzeugluftreifens beispielsweise sequentiell oder simultan aufgebracht werden könnten. Insbesondere mit Blick auf eine einfache Herstellbarkeit, aber auch für eine stabile Fixierung wird lediglich ein elektrisch leitfähiger Faden aufgebracht, wodurch in vorteilhafter Weise die Herstellungsvorrichtungen vereinfacht werden können.

Eher für besondere Anwendungen denkbar ist ein nicht erfindungsgemäßer Fahrzeugluftreifen, wobei der Fahrzeugluftreifen zwei oder mehr, bevorzugt genau zwei, elektrisch leitfähige Fäden umfasst, wobei die elektrisch leitfähigen Fäden jeweils abschnittsweise die radial innenliegende Oberfläche der Spulbandage kontaktiert und abschnittsweise die radial außenliegende Oberfläche der Spulbandage kontaktiert, wobei sich die elektrisch leitfähigen Fäden jeweils zumindest an einer Stelle durch die Spulbandage hindurch erstreckt. Bevorzugt ist jedoch ein erfindungsgemäßer Fahrzeugluftreifen, wobei der Fahrzeugluftreifen genau einen leitfähige Faden umfasst.

Erfindungswesentlich ist, dass der elektrisch leitfähige Faden nicht nur lediglich oberhalb der Spulbandage oder lediglich unterhalb der Spulbandage angeordnet ist, sondern im Gegensatz hierzu teilweise oberhalb und teilweise unterhalb verläuft, und sich an zumindest einer Stelle durch die Spulbandage erstreckt. Hierdurch bildet der elektrisch leitfähige Faden einer Leitungspfad durch die Spulbandage aus und kann eine elektrisch leitfähige Verbindung zwischen der Oberseite und der Unterseite der Spulbandage ausbilden. Für die weit überwiegende Zahl der Fälle liegt dabei oberhalb der Spulbandage der Laufstreifen, welcher vom elektrisch leitfähigen Faden insbesondere im Bereich des CCB kontaktiert werden kann und unterhalb der Spulbandage die Gürtellage bzw. die obere von mehreren Gürtellagen, welche wiederum Kontakt zu dem elektrisch leitfähigen Faden haben. Bevorzugt ist entsprechend ein nicht erfindungsgemäßer Fahrzeugluftreifen, wobei der elektrisch leitfähige Faden abschnittsweise die radial innenliegende Oberfläche des Laufstreifens kontaktiert. Bevorzugt ist nicht entsprechend zusätzlich oder alternativ ein nicht erfindungsgemäßer Fahrzeugluftreifen, wobei der elektrisch leitfähige Faden abschnittsweise die radial außenliegende Oberfläche der Gürtellage kontaktiert.

In vielen Fällen wird die Gürtellage und der in ihr verarbeitete Gummiwerkstoff eine bessere elektrische Leitfähigkeit haben als der Gummiwerkstoff der Spulbandage, so dass die elektrische Ableitung durch die Gürtelbandagen erfolgen kann. Bevorzugt ist insoweit ein nicht erfindungsgemäßer Fahrzeugluftreifen, wobei die elektrische Leitfähigkeit des zweiten Gummiwerkstoffs bei 20 °C um den Faktor 10 oder mehr, bevorzugt um den Faktor 100 oder mehr, besonders bevorzugt um den Faktor 1000 oder mehr, größer ist als die elektrische Leitfähigkeit des dritten Gummiwerkstoffs bei 20 °C.

Es ist nicht erfindungsgemäß vorgesehen den elektrisch leitfähigen Faden möglichst mittig unterhalb des Laufstreifens anzuordnen, sodass dieser besonders fest zwischen den verschiedenen Lagen angeordnet werden kann und in axialer Richtung nicht zwischen den Lagen hinausragt.

Erfindungsgemäß ist der elektrisch leitfähige Faden bezogen auf die axiale Richtung des Fahrzeugluftreifen über 80 % oder mehr, bevorzugt 90 % oder mehr, besonders bevorzugt 95 % oder mehr, ganz besonders bevorzugt über im Wesentlichen 100 % der Länge des elektrisch leitfähigen Fadens im Zentralbereich des Fahrzeugluftreifens angeordnet, wobei der Zentralbereich im Bereich von 0,2*B bis 0,8*B, bevorzugt im Bereich von 0,25*B bis 0,75*B, besonders bevorzugt im Bereich von 0,3*B bis 0,7*B, ganz besonders bevorzugt im Bereich von 0,35*B bis 0,75*B, liegt, wobei B die Breite der Spulbandage in axialer Richtung ist.

In solchen Ausgestaltungen, in denen die Gürtellagen bzw. der darin vorliegende zweite Gummiwerkstoff, keine ausreichende elektrische Leitfähigkeit bereitstellen, beispielsweise weil diese ebenfalls auf einen vorteilhaften Rollwiderstand hin optimiert wurde, können in erfindungsgemäßen Fahrzeugluftreifen zusätzliche Maßnahmen vorgesehen werden, um dennoch eine Ableitung zu ermöglichen. Beispielsweise ist es denkbar, dass zwischen der Spulbandage und der Gürtellage zusätzliche Querfäden angeordnet werden, welche sich beispielsweise quer zur Umfangsrichtung von den Seitenwandbauteilen der Fahrzeugluftreifen über die Gürtellage hinweg erstrecken und den elektrisch leitfähigen Faden, welcher sich durch die Spulbandage erstreckt, kontaktieren, sodass eine gute Leitfähigkeit von der Oberfläche der Spulbandage bis in die Seitenbauteile durch den elektrisch leitfähigen Faden und die Querfäden sichergestellt wird. Nach Einschätzung der Erfinder ist es jedoch insbesondere unter fertigungstechnischen Aspekten sowie mit Blick auf eine stabile Konstruktion besonders bevorzugt, den elektrisch leitfähigen Faden, welcher teilweise durch die Spulbandage geführt wird, an zumindest einer Stelle bzw. an mehreren über den Umfang verteilten Stellen, nicht lediglich im Zentralbereich des Fahrzeugluftreifens anzuordnen, sondern den elektrisch leitfähigen Faden vielmehr bis in den Seitenwandbereich zu ziehen, sodass der oberhalb und unterhalb der Spulbandage verlaufende und durch die Spulbandage fixierte elektrisch leitfähige Faden selbst an einigen Stellen den Kontakt mit den Seitenwandbauteilen herstellen kann, um so auch eine gegebenenfalls nicht ausreichend elektrisch leitfähige Gürtellage zu überbrücken. Bevorzugt ist ein erfindungsgemäßer Fahrzeugluftreifen, wobei der elektrisch leitfähige Faden bezogen auf den Umfang des Fahrzeugluftreifens an zumindest einer Stelle, bevorzugt an einer Vielzahl von Stellen, besonders bevorzugt an einer rotationssymmetrisch über den Umfang verteilten Vielzahl von Stellen, des Fahrzeugluftreifens in axialer Richtung über die Gürtellage hinausragt, wobei der elektrisch leitfähige Faden an der oder den Stellen bevorzugt ein Seitenwandbauteil kontaktiert.

Der elektrisch leitfähige Faden liegt teilweise auf der einen bzw. der anderen Seite der Spulbandage und verläuft mit einem dritten Teil durch die Spulbandage hindurch. Die Länge des durch die Spulbandage verlaufenden Teils bzw. die Summe sämtlicher durch die Spulbandage verlaufender Teile des elektrisch leitfähigen Fadens bestimmt sich maßgeblich durch die Zahl der Durchläufe durch die Spulbandage und deren Dicke. Nach Einschätzung der Erfinder ist es grundsätzlich vorteilhaft, eine größere Zahl an Durchläufen durch die Spulbandage vorzusehen, um über den gesamten Reifenumfang eine gute "Überbrückung" der Spulbandage zu ermöglichen. Hierbei ist es insbesondere bevorzugt, wenn der elektrisch leitfähige Faden alternierend zwischen der Ober- und der Unterseite der Spulbandage geführt wird.

Bevorzugt ist entsprechend ein nicht erfindungsgemäßer Fahrzeugluftreifen wobei sich der elektrisch leitfähige Faden an einer Vielzahl von Stellen, bevorzugt zwei oder mehr, besonders bevorzugt fünf oder mehr, ganz besonders bevorzugt zehn oder mehr, insbesondere bevorzugt zwanzig oder mehr, durch die Spulbandage hindurch erstreckt. Besonders bevorzugt ist ein nicht erfindungsgemäßer Fahrzeugluftreifen, wobei die Stellen, an denen sich der elektrisch leitfähige Faden durch die Spulbandage hindurch erstreckt, über den Umfang des Fahrzeugluftreifens verteilt sind, bevorzugt gleichmäßig und/oder bezogen auf die Rotationsachse des Fahrzeugluftreifens rotationssymmetrisch. Besonders bevorzugt ist zusätzlich oder alternativ auch ein nicht erfindungsgemäßer Fahrzeugluftreifen wobei der elektrisch leitfähige Faden bezogen auf seine Längsrichtung mehrfach alternierend zunächst die radial innenliegende Oberfläche der Spulbandage und anschließend die radial außenliegende Oberfläche der Spulbandage kontaktiert.

Für eine zuverlässige Kontaktierung der oberhalb bzw. der unterhalb der Spulbandage liegenden Lagen schlagen die Erfinder vor, dass es zielführend ist, große Teile des elektrisch leitfähigen Faden tatsächlich auf der Ober- bzw. Unterseite anzuordnen. Bevorzugt ist ein nicht erfindungsgemäßer Fahrzeugluftreifen, wobei der elektrisch leitfähige Faden über eine Länge von 20 % oder mehr, bevorzugt 30 % oder mehr, besonders bevorzugt 40 % oder mehr, die radial innenliegende Oberfläche der Spulbandage kontaktiert, bezogen auf die Länge des elektrisch leitfähigen Fadens, und/oder wobei der elektrisch leitfähige Faden über eine Länge im Bereich von 40 bis 55 %, bevorzugt im Bereich von 45 bis 50 %, die radial innenliegende Oberfläche der Spulbandage kontaktiert, bezogen auf die Länge des elektrisch leitfähigen Fadens. Bevorzugt ist zusätzlich oder alternativ ein nicht erfindungsgemäßer Fahrzeugluftreifen, wobei der elektrisch leitfähige Faden über eine Länge von 20 % oder mehr, bevorzugt 30 % oder mehr, besonders bevorzugt 40 % oder mehr, die radial außenliegende Oberfläche der Spulbandage kontaktiert, bezogen auf die Länge des elektrisch leitfähigen Fadens, und/oder wobei der elektrisch leitfähige Faden über eine Länge im Bereich von 40 bis 55 %, bevorzugt im Bereich von 45 bis 50 %, die radial außenliegende Oberfläche der Spulbandage kontaktiert, bezogen auf die Länge des elektrisch leitfähigen Fadens. Bevorzugt ist zusätzlich oder alternativ zudem ein nicht erfindungsgemäßer Fahrzeugluftreifen, wobei sich der elektrisch leitfähige Faden über eine Länge von 50 % oder weniger, bevorzugt 30 % oder weniger, besonders bevorzugt 10 % oder weniger, im Inneren der Spulbandage erstreckt, bezogen auf die Länge des elektrisch leitfähigen Fadens.

Aus dem Umstand, dass die Verwendung lediglich eines leitfähigen Fadens bevorzugt ist, jedoch eine möglichst über den Umfang verteilte Anordnung mehrerer Durchgänge durch die Spulbandage gewünscht ist, resultiert, dass ein vergleichsweise langer elektrisch leitfähiger Faden benötigt wird. Bevorzugt ist folglich ein nicht erfindungsgemäßer Fahrzeugluftreifen, wobei der elektrisch leitfähige Faden eine Länge von 10 m oder mehr, bevorzugt 20 m oder mehr, besonders bevorzugt 40 m oder mehr, aufweist.

Eine besonders bevorzugte Verlaufsform des elektrisch leitfähigen Fadens ergibt sich aus der Durchführung des bevorzugten erfindungsgemäßen Verfahrens, wie es nachfolgend weiter offenbart wird. Hierbei wird der elektrisch leitfähige Faden bevorzugt auf die rotierende Reifenaufbautrommel aufgespult, wobei der Spulkopf in axialer Richtung hin und her bewegt wird. Hierdurch ergibt sich je nach Verfahrensführung in der Projektion ein zickzack-förmiger bzw. mäandernder Verlauf, welcher sich auch im späteren Fahrzeugluftreifen wiederfindet. Bevorzugt ist entsprechend ein erfindungsgemäßer Fahrzeugluftreifen, wobei der elektrisch leitfähige Faden in der Draufsicht aus der radialen Richtung entlang der Umfangsrichtung einen zickzackförmigen oder mäandernden, vorzugsweise mäandernden, Verlauf aufweist.

Die Erfindung betrifft zudem ein Verfahren zur Herstellung eines erfindungsgemäßen Fahrzeugluftreifens, umfassend die Herstellung eines Fahrzeugluftreifenrohlings, umfassend die Verfahrensschritte:
a) Herstellen oder Bereitstellen eines Reifenkarkassenrohlings, umfassend zumindest einen in einer ersten vulkanisierbaren Kautschukmischung eingebetteten ersten Festigkeitsträger,
b) Anordnen eines Gürtellagenrohlings, umfassend zumindest einen in einer zweiten vulkanisierbaren Kautschukmischung eingebetteten zweiten Festigkeitsträger, radial außenliegenden zum Reifenkarkassenrohling,
c) Aufbringen eines Spulmaterials, umfassend zumindest einen in einer dritten vulkanisierbaren Kautschukmischung eingebetteten dritten Festigkeitsträger, zum Erzeugen eines relativ zum Gürtellagenrohling radial außenliegenden Spulbandagenrohlings,
d) Aufbringen des elektrisch leitfähigen Fadens, und
e) Anordnen eines Laufstreifenrohlings radial außenliegenden zum Spulbandagenrohling,
sowie den Verfahrensschritt:
e) Vulkanisieren des Fahrzeugluftreifenrohlings zum Erhalt des Fahrzeugluftreifens,
wobei die Verfahrensschritte c) und d) so durchgeführt werden, dass das Spulmaterial teilweise radial oberhalb des elektrisch leitfähigen Fadens aufgebracht wird, und dass der elektrisch leitfähige Faden teilweise radial oberhalb des Spulmaterials aufgebracht wird und dass der elektrisch leitfähige Faden zumindest an einer Stelle zwischen zwei Windungen des Spulmaterials hindurchgeführt wird.

Das erfindungsgemäße Verfahren ähnelt vom Grundablauf prinzipiell dem dem Fachmann bekannten typischen Verfahren zum Herstellen von Fahrzeugluftreifenrohlingen mit anschließender Vulkanisation. Der Reifenkarkassenrohling, der Gürtellagenrohling, der Spulbandagenrohling und der Laufstreifenrohling umfassen dabei jeweils vulkanisierbare Kautschukmischungen, welche anschließend mittels Vulkanisation in die gewünschten Gummiwerkstoffe überführt werden können. Es kann als Vorteil des erfindungsgemäßen Verfahrens gesehen werden, dass dieses seine Vorteile aus der konstruktiven Ausgestaltung des Fahrzeugluftreifenaufbaus zieht und insoweit hinsichtlich der chemischen Ausgestaltung der eingesetzten vulkanisierbaren Kautschukmischung sehr flexibel ist, wobei sich insbesondere hinsichtlich der Materialien der Spulbandage eine vorteilhafte Flexibilität ergibt, da diese nicht auf eine hinreichende elektrische Leitfähigkeit ausgelegt werden müssen.

Beispielhaft ist ein Verfahren, wobei die erste vulkanisierbaren Kautschukmischung und/oder die zweite vulkanisierbare Kautschukmischung und/oder die dritte vulkanisierbare Kautschukmischung und/oder die vierte vulkanisierbare Kautschukmischung und/oder die fünfte vulkanisierbare Kautschukmischung einen oder mehrere Dienkautschuke umfasst.

Beispielhaft ist zudem ein nicht erfindungsgemäßes Verfahren, wobei der eine oder die mehreren Dienkautschuke ausgewählt sind aus der Gruppe bestehend aus natürlichem Polyisopren, synthetischem Polyisopren, epoxidiertem Polyisopren, Butadien-Kautschuk, lösungspolymerisiertem Styrol-Butadien-Kautschuk, emulsionspolymerisiertem Styrol-Butadien-Kautschuk, Polynorbornen, Ethylen-Propylen-Dien-Kautschuk, NitrilKautschuk, Acrylat-Kautschuk, Styrol-Isopren-Butadien-Terpolymer, Butylkautschuk und Halobutylkauschuk, wobei der eine oder die mehreren Dienkautschuke bevorzugt ausgewählt ist aus der Gruppe bestehend aus natürlichem Polyisopren (NR), synthetischem Polyisopren (IR), Butadien-Kautschuk (BR), lösungspolymerisiertem Styrol-Butadien-Kautschuk (SSBR) und emulsionspolymerisiertem Styrol-Butadien-Kautschuk (ESBR), wobei der eine oder die mehreren Dienkautschuke besonders bevorzugt ausgewählt ist aus der Gruppe bestehend aus lösungspolymerisiertem Styrol-Butadien-Kautschuk und emulsionspolymerisiertem Styrol-Butadien-Kautschuk Beispielhaft ist auch ein nicht erfindungsgemäßes Verfahren, wobei die erste vulkanisierbaren Kautschukmischung und/oder die zweite vulkanisierbare Kautschukmischung und/oder die dritte vulkanisierbare Kautschukmischung und/oder die vierte vulkanisierbare Kautschukmischung und/oder die fünfte vulkanisierbare Kautschukmischung einen oder mehrere Füllstoffe umfassen, wobei die Füllstoffe bevorzugt ausgewählt sind aus der Gruppe bestehend aus Ruß, pyrogenem Siliciumdioxid und gefälltem Siliciumdioxid, besonders bevorzugt Ruß und gefälltem Siliciumdioxid.

Beispielhaft ist ebenfalls ein nicht erfindungsgemäßes Verfahren, wobei die erste vulkanisierbaren Kautschukmischung und/oder die zweite vulkanisierbare Kautschukmischung und/oder die dritte vulkanisierbare Kautschukmischung und/oder die vierte vulkanisierbare Kautschukmischung und/oder die fünfte vulkanisierbare Kautschukmischung ein oder mehrere weitere Additive umfasst, wobei die weiteren Additive bevorzugt ausgewählt sind aus der Gruppe bestehend aus Weichmachern, Kupplungsagenzien, Methylen-Donoren, Alterungsschutzmittel, beispielsweise N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ), Aktivatoren, beispielsweise Zinkoxid und Fettsäuren, Wachsen, Mastikationshilfsmitteln, beispielsweise 2,2'-Dibenzamidodiphenyldisulfid (DBD) und Verarbeitungshilfsmitteln.

Das erfindungsgemäße Verfahren kann bevorzugt auf einer Reifenaufbautrommel durchgeführt werden. Entsprechende Vorrichtungen sind dem Fachmann im Bereich der Technik bekannt und bei vielen Fahrzeugreifenherstellern verfügbar. Entsprechende Reifenaufbautrommeln sind regelmäßig rotierbar und können abschnittsweise expandiert werden. Für die weit überwiegende Zahl der Fälle relevant ist ein nicht erfindungsgemäßes Verfahren, wobei der Reifenkarkassenrohling auf einer Reifenaufbautrommel hergestellt oder bereitgestellt wird, bevorzugt bereitgestellt.

Sofern keine weiteren Lagen vorgesehen werden sollen, können die eine oder die mehreren Gürtellagenrohlinge auf den Reifenkarkassenrohling angeordnet werden. Bevorzugt ist somit auch ein nicht erfindungsgemäßes Verfahren, wobei der Gürtellagenrohling unmittelbar auf dem Reifenkarkassenrohling angeordnet wird.

In dem aus dem Stand der Technik bekannten Verfahren würde anschließend die Spulbandage durch Aufspulen bzw. -wickeln des bahnförmigen Spulmaterials, welches zumeist eine Breite von wenigen Zentimetern aufweist, auf die Gürtellagen fortgesetzt, bevor anschließend der Laufstreifenrohling aufgebracht wird. Für die Praxis besonders relevant ist ein erfindungsgemäßes Verfahren, wobei das Aufbringen des Spulmaterials durch Spulen oder Wickeln erfolgt. Bevorzugt ist ein nicht erfindungsgemäßes Verfahren, wobei das Spulmaterial beim Aufbringen überlappend oder auf Stoß aufgebracht wird.

Bevorzugt ist zusätzlich oder alternativ ein erfindungsgemäßes Verfahren, wobei der Laufstreifenrohling unmittelbar auf dem Spulbandagenrohling angeordnet wird.

Bevorzugt wird der elektrisch leitfähige Faden in der gewünschten Anordnung ebenfalls mittels Spulen oder Wickeln aufgebracht, wobei bevorzugt das Aufbringen des Spulmaterials zur Herstellung des Spulbandagenrohling und das Aufbringen des elektrisch leitfähigen Fadens zeitgleich oder alternierend, bevorzugt zeitgleich, erfolgt, wodurch die nach Einschätzung der Erfinder besonders bevorzugte Anordnung erhalten werden kann. Bevorzugt ist entsprechend ein Verfahren, wobei das Aufbringen des elektrisch leitfähigen Fadens durch Spulen oder Wickeln erfolgt.

Erfindungsgemäß werden die Verfahrensschritte c) und d) zumindest teilweise zeitgleich durchgeführt**.**

Insbesondere kann der elektrisch leitfähige Faden in einem mäandernden oder zickzack-förmigen Muster im Zentralbereich des Fahrzeugreifenrohlings aufgespult werden, während die Spulbandage von einer Seite zur anderen Seite aufgespult wird. Hieraus folgt, dass das aufgespulte Spulmaterial an einigen Stellen oberhalb des elektrisch leitfähigen Fadens liegen wird, um diesen unter sich zu fixieren, während der elektrisch leitfähige Faden an anderer Stelle oberhalb der bereits aufgelegten Wicklungen des Spulbandagenrohlings aufgelegt wird, woraus automatisch folgt, dass ein Teil des elektrisch leitfähigen Fadens zwischen zwei Wicklungen fixiert wird und durch den Spulbandagenrohling hindurch reicht. Bevorzugt ist somit ein erfindungsgemäßes Verfahren, wobei der elektrisch leitfähige Faden während des Aufbringens des Spulmaterials zickzackförmig oder mäandernd aufgebracht wird, bevorzugt im Zentralbereich, so dass ein Teil des aufgebrachten elektrisch leitfähigen Fadens auf das bereits aufgebrachte Spulmaterial aufgebracht wird und ein Teil des aufgebrachten elektrisch leitfähigen Fadens vom aufgebrachten Spulmaterial bedeckt wird. Besonders bevorzugt ist ein nicht erfindungsgemäßes Verfahren, wobei der elektrisch leitfähige Faden durch einen an der Reifenaufbautrommel angeordneten Spulkopf aufgebracht wird, wobei der elektrisch leitfähige Faden durch einen an der Reifenaufbautrommel angeordneten Spulkopf aufgebracht wird, wobei der Spulkopf eine in axialer Richtung hin und her verschieblichen Spulkopf umfasst.

Als weiterer Vorteil der vorstehend beschriebenen Applikationsmethode kann dabei gesehen werden, dass es durch ein in Abständen erfolgendes zusätzliches Auslenken des Spulkopfes möglich ist, den aufgespulten elektrisch leitfähigen Faden in gewissen Abständen bis zu den Seitenwandbauteilen zu ziehen, sodass auch eine möglicherweise bestehende geringe Leitfähigkeit der Gürtellagen durch die Maßnahme ausgeglichen werden kann. Besonders bevorzugt ist somit zusätzlich oder alternativ ein nicht erfindungsgemäßes Verfahren, wobei der elektrisch leitfähige Faden bezogen auf den Umfang des Fahrzeugluftreifens an zumindest einer Stelle, bevorzugt an einer Vielzahl von Stellen, besonders bevorzugt an einer rotationssymmetrisch über den Umfang verteilten Vielzahl von Stellen, des Fahrzeugluftreifens in axialer Richtung über den Gürtellagenrohlings hinaus aufgebracht wird, wobei der elektrisch leitfähige Faden an der oder den Stellen bevorzugt so aufgebracht wird, dass er ein Seitenwandbauteil kontaktiert.

Der so erhaltene Fahrzeugluftreifenrohling kann anschließend in gewohnter Weise in den erfindungsgemäßen Fahrzeugluftreifen überführt werden, indem der Fahrzeugluftreifenrohling vulkanisiert wird. Bevorzugt ist insoweit ein nicht erfindungsgemäßes Verfahren, wobei das Vulkanisieren bei einer Temperatur im Bereich von 120 bis 200 °C, bevorzugt im Bereich von 130 bis 180 °C, erfolgt. Bevorzugt ist zusätzlich oder alternativ ein nicht erfindungsgemäßes Verfahren, wobei das Vulkanisieren in einer Vulkanisationsform erfolgt.

Nachfolgend werden bevorzugte Ausführungsformen der Erfindung unter Bezugnahme auf die beiliegenden Figuren näher erläutert und beschrieben. Dabei zeigen:
- Fig. 1: eine schematische Querschnittsdarstellung eines erfindungsgemäßen Fahrzeugluftreifens in einer bevorzugten Ausführungsform; und
- Fig. 2: eine schematische Detaildarstellung der Lagen eines erfindungsgemäßen Fahrzeugluftreifens in der Draufsicht und im Querschnitt.

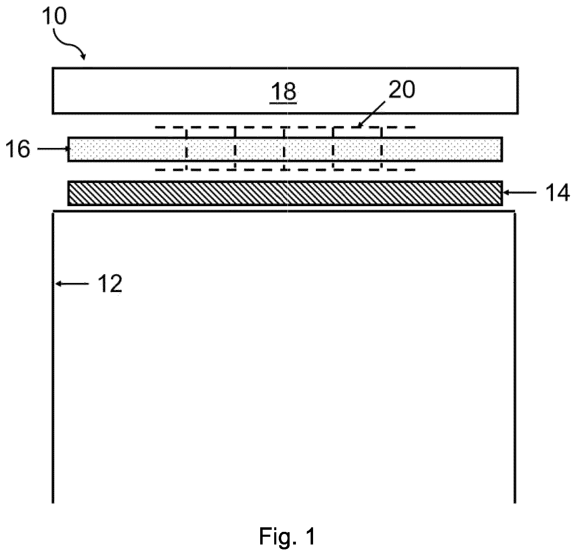

Fig. 1 zeigt in einer vereinfachten schematischen Querschnittsdarstellung durch einen erfindungsgemäßen Fahrzeugluftreifen 10 als Explosionsdarstellung den Aufbau der wesentlicher Lagen. Der Fahrzeugluftreifen 10 umfasst zunächst eine Reifenkarkasse 12, deren Randbereiche jeweils in Reifenwülsten enden, wobei diese in Fig. 1 ebenso wenig darstellt sind wie die entsprechenden Seitenwandbauteile oder die Reifeninnenschicht. Oberhalb der Reifenkarkasse 12, d. h. radial außen, ist eine Gürtellage 14 angeordnet, während das radial äußere Bauteil des Fahrzeugluftreifens 10 durch einen Laufstreifen 18 gebildet wird.

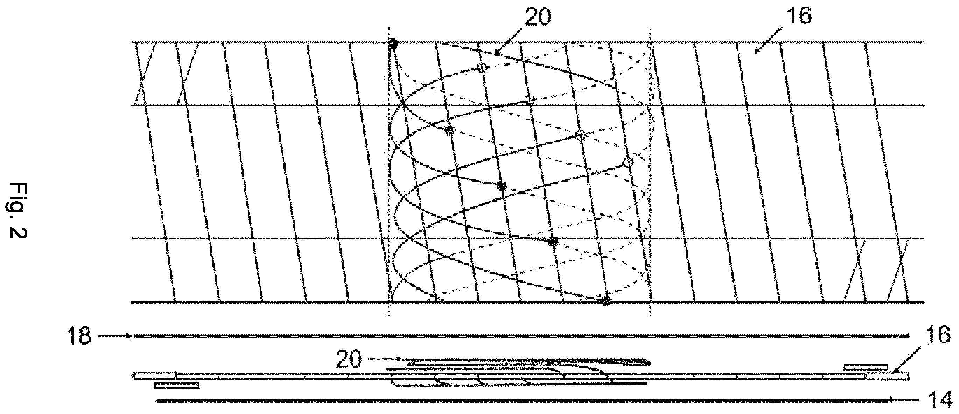

Zwischen dem Laufstreifens 18 und der Gürtellage 14 ist eine Spulbandage 16 angeordnet, die im gezeigten Beispiel aus einem elektrisch relativ schlecht leitfähigen Gummiwerkstoff besteht, in welchem textile Festigkeitsträger angeordnet sind, Die gewünschte elektrisch leitfähige Verbindung zwischen der Unterseite des Laufstreifens 18, insbesondere mit dem im Laufstreifen 18 angeordneten CCB und der im gezeigten Beispiel der Fig. 1 hinreichend leitfähig ausgebildeten Gürtellage 14 wird durch einen elektrisch leitfähigen Faden 20 realisiert, welcher teilweise auf der Oberseite und teilweise auf der Unterseite der Spulbandage 16 angeordnet ist und sich an mehreren Stellen durch die Spulbandage 16 hindurch erstreckt. In der schematischen Darstellung der Fig. 1 ist der Verlauf des elektrisch leitfähigen Fadens 20, bei dem es sich um einen mit einer elektrisch gut leitfähigen, rußhaltigen Haftvermittlerschicht beschichteten Kunststofffaden handelt, stark vereinfacht und in der Projektion dargestellt, so dass mehrere Durchläufe durch die Spulbandage angedeutet werden, die an unterschiedlichen Umfangsstellen erfolgen. Eine bessere Visualisierung eines besonders bevorzugten Verlaufs des elektrisch leitfähigen Fadens 20 erlaubt Fig. 2.

Im rechten Teil der Fig. 2 ist dabei erneut eine schematische Querschnittsdarstellung der wesentlichen Lagen des Fahrzeugluftreifens 10 dargestellt, nämlich der Gürtellage 14, des Laufstreifens 18 und der dazwischen angeordneten Spulbandage 16. Darüber hinaus ist in der detaillierteren Querschnittsansicht zu erkennen, dass auch der im Zentralbereich des Fahrzeugluftreifens aufgespulte elektrisch leitfähige Faden 20 infolge des bevorzugten Herstellungsverfahrens oberhalb und unterhalb des Spulbandage 16 eine Art Schicht bildet, in der der elektrisch leitfähige Faden 20 teilweise mehrfach mit sich selbst überlappt. Dabei ist in der Querschnittsansicht gut zu erkennen, dass sich der elektrisch leitfähige Faden 20 an mehreren Stellen durch die Spulbandage 16 hindurch erstreckt.

Neben der Querschnittsdarstellung ist in Fig. 2 eine Draufsicht aus der radialen Richtung auf die fertig aufgespulte Spulbandage gezeigt, wie sie im besonders bevorzugten erfindungsgemäßen Verfahren, in welchem der elektrisch leitfähige Faden 20 im Wesentlichen zeitgleich mit dem Spulmaterial 16 aufgespult wird, ergibt. In diesem Teil der Fig. 2 ist der mäandernde Verlauf des elektrisch leitfähigen Fadens 20 zu erkennen. Die gestrichelten Linien zeigen dabei die Teile des elektrisch leitfähigen Fadens 20 an, welche infolge der simultanen Aufspulung unterhalb der Spulbandage 16 liegen und von dieser in vorteilhafter Weise fixiert werden.

Die Stellen, an denen der elektrisch leitfähige Faden 20 zwischen den Windungen des Spulmaterials und damit durch die Spulbandage 16 hindurchtritt, sind durch Kreise bzw. Punkte visualisiert.

### Bezugszeichenliste

- 10: Fahrzeugluftreifen
- 12: Reifenkarkasse
- 14: Gürtellage
- 16: Spulbandage
- 18: Laufstreifen
- 20: Elektrisch leitfähiger Faden

## Patentansprüche

1. Fahrzeugluftreifen (10), umfassend:
i) eine Reifenkarkasse (12), umfassend zumindest einen in einem ersten Gummiwerkstoff eingebetteten ersten Festigkeitsträger,
ii) eine relativ zur Reifenkarkasse (12) radial außenliegende Gürtellage (14), umfassend zumindest einen in einem zweiten Gummiwerkstoff eingebetteten zweiten Festigkeitsträger,
iii) eine relativ zur Gürtellage (14) radial außenliegende Spulbandage (16), umfassend zumindest einen in einem dritten Gummiwerkstoff eingebetteten dritten Festigkeitsträger,
iv) einen relativ zur Spulbandage (16) radial außenliegenden Laufstreifen (18), und
v) einen elektrisch leitfähigen Faden (20),
wobei der elektrisch leitfähige Faden (20) abschnittsweise die radial innenliegende Oberfläche der Spulbandage (16) kontaktiert und abschnittsweise die radial außenliegende Oberfläche der Spulbandage (16) kontaktiert, wobei sich der elektrisch leitfähige Faden (20) zumindest an einer Stelle durch die Spulbandage (16) hindurch erstreckt,
**dadurch gekennzeichnet, dass**
bezogen auf die axiale Richtung des Fahrzeugluftreifen (10) mehr als 80 % der Länge des elektrisch leitfähigen Fadens (20) im Zentralbereich des Fahrzeugluftreifens (10) angeordnet ist, wobei der Zentralbereich im Bereich von 0,2*B bis 0,8*B liegt, wobei B die Breite der Spulbandage (16) in axialer Richtung ist.

2. Fahrzeugluftreifen (10) nach Anspruch 1, wobei der elektrisch leitfähige Faden (20) bezogen auf seine Längsrichtung mehrfach alternierend zunächst die radial innenliegende Oberfläche der Spulbandage (16) und anschließend die radial außenliegende Oberfläche der Spulbandage (16) kontaktiert.

3. Fahrzeugluftreifen (10) nach einem der Ansprüche 1 bis 2, wobei der elektrisch leitfähige Faden (20) in der Draufsicht aus der radialen Richtung entlang der Umfangsrichtung einen zickzackförmigen oder mäandernden Verlauf aufweist.

4. Fahrzeugluftreifen (10) nach einem der Ansprüche 1 bis 3, wobei der elektrisch leitfähige Faden (20) zumindest ein textiles Filament umfasst.

5. Fahrzeugluftreifen (10) nach einem der Ansprüche 1 bis 4, wobei der elektrisch leitfähige Faden (20) eine Beschichtung mit einem elektrisch leitfähigen Material umfasst und/oder mit einem elektrisch leitfähigen Material imprägniert ist.

6. Verfahren zur Herstellung eines Fahrzeugluftreifens (10) nach einem der Ansprüche 1 bis 5, umfassend die Herstellung eines Fahrzeugluftreifenrohlings, umfassend die Verfahrensschritte:
a) Herstellen oder Bereitstellen eines Reifenkarkassenrohlings, umfassend zumindest einen in einer ersten vulkanisierbaren Kautschukmischung eingebetteten ersten Festigkeitsträger,
b) Anordnen eines Gürtellagenrohlings, umfassend zumindest einen in einer zweiten vulkanisierbaren Kautschukmischung eingebetteten zweiten Festigkeitsträger, radial außenliegend zum Reifenkarkassenrohling,
c) Aufbringen eines Spulmaterials, umfassend zumindest einen in einer dritten vulkanisierbaren Kautschukmischung eingebetteten dritten Festigkeitsträger, zum Erzeugen eines relativ zum Gürtellagenrohling radial außenliegenden Spulbandagenrohlings,
d) Aufbringen des elektrisch leitfähigen Fadens (20), und
e) Anordnen eines Laufstreifenrohlings radial außenliegend zum Spulbandagenrohling,
sowie den Verfahrensschritt:
e) Vulkanisieren des Fahrzeugluftreifenrohlings zum Erhalt des Fahrzeugluftreifens (10),
wobei die Verfahrensschritte c) und d) so durchgeführt werden, dass das Spulmaterial teilweise radial oberhalb des elektrisch leitfähigen Fadens (20) aufgebracht wird, und dass der elektrisch leitfähige Faden (20) teilweise radial oberhalb des Spulmaterials aufgebracht wird und dass der elektrisch leitfähige Faden (20) zumindest an einer Stelle zwischen zwei Windungen des Spulmaterials hindurchgeführt wird,
**dadurch gekennzeichnet, dass** die Verfahrensschritte c) und d) zumindest teilweise zeitgleich durchgeführt werden..

7. Verfahren nach Anspruch 6, wobei das Aufbringen des elektrisch leitfähigen Fadens durch Spulen oder Wickeln erfolgt.

8. Verfahren nach Anspruch 7, wobei der elektrisch leitfähige Faden durch einen an der Reifenaufbautrommel angeordneten Spulkopf aufgebracht wird, wobei der Spulkopf eine in axialer Richtung hin und her verschieblichen Spulkopf umfasst.

## Claims

1. Pneumatic vehicle tyre (10), comprising:
i) a tyre carcass (12), comprising at least one first strength member embedded in a first rubber material,
ii) a belt ply (14) which is radially to the outside relative to the tyre carcass (12), comprising at least one second strength member embedded in a second rubber material,
iii) a jointless bandage (16) which is radially to the outside relative to the belt ply (14), comprising at least one third strength member embedded in a third rubber material,
iv) a tread (18) which is radially to the outside relative to the jointless bandage (16), and
v) an electrically conductive thread (20),
wherein the electrically conductive thread (20) in some portions contacts the radially inner surface of the jointless bandage (16) and in some portions contacts the radially outer surface of the jointless bandage (16), wherein the electrically conductive thread (20) at least at one point extends through the jointless bandage (16), **characterized in that**,
in relation to the axial direction of the pneumatic vehicle tyre (10), more than 80% of the length of the electrically conductive thread (20) is arranged in the central region of the pneumatic vehicle tyre (10), wherein the central region lies in the range from 0.2*B to 0.8*B, wherein B is the width of the jointless bandage (16) in the axial direction.

2. Pneumatic vehicle tyre (10) according to Claim 1, wherein the electrically conductive thread (20), in relation to its longitudinal direction, alternately contacts first the radially inner surface of the jointless bandage (16) and then the radially outer surface of the jointless bandage (16) multiple times.

3. Pneumatic vehicle tyre (10) according to either of Claims 1 and 2, wherein the electrically conductive thread (20) has a zigzag-shaped or meandering profile in plan view from the radial direction along the circumferential direction.

4. Pneumatic vehicle tyre (10) according to any of Claims 1 to 3, wherein the electrically conductive thread (20) comprises at least one textile filament.

5. Pneumatic vehicle tyre (10) according to any of Claims 1 to 4, wherein the electrically conductive thread (20) comprises a coating comprising an electrically conductive material and/or is impregnated with an electrically conductive material.

6. Method for producing a pneumatic vehicle tyre (10) according to any of Claims 1 to 5, comprising the production of a pneumatic vehicle tyre blank, comprising the method steps:
a) producing or providing a tyre carcass blank, comprising at least one first strength member embedded in a first vulcanizable rubber mixture,
b) arranging a belt ply blank, comprising at least one second strength member embedded in a second vulcanizable rubber mixture, radially to the outside with respect to the tyre carcass blank,
c) applying a spooling material, comprising at least one third strength member embedded in a third vulcanizable rubber mixture, to produce a jointless bandage blank which is radially to the outside relative to the belt ply blank,
d) applying the electrically conductive thread (20), and
e) arranging a tread blank radially to the outside with respect to the jointless bandage blank,
and the method step:
e) vulcanizing the pneumatic vehicle tyre blank to obtain the pneumatic vehicle tyre (10),
wherein method steps c) and d) are carried out such that the spooling material is applied partially radially above the electrically conductive thread (20), and such that the electrically conductive thread (20) is applied partially radially above the spooling material, and such that the electrically conductive thread (20) at least at one point is guided between two turns of the spooling material,
**characterized in that** method steps c) and d) are carried out at least partially simultaneously.

7. Method according to Claim 6, wherein the application of the electrically conductive thread is effected by means of spooling or winding.

8. Method according to Claim 7, wherein the electrically conductive thread is applied by a spooling head arranged on the tyre building drum, wherein the spooling head comprises a spooling head which is displaceable back and forth in the axial direction.

## Revendications

1. Pneumatique (10) de véhicule, comprenant :
i) une carcasse (12) de pneu comprenant au moins un premier élément de renfort intégré dans un premier matériau en caoutchouc ;
ii) une couche de ceinture (14) située radialement à l'extérieur par rapport à la carcasse (12) de pneu, comprenant au moins un deuxième élément de renfort intégré dans un deuxième matériau en caoutchouc,
iii) un bandage spiralé (16) situé radialement à l'extérieur par rapport à la couche de ceinture (14), comprenant au moins un troisième élément de renfort intégré dans un troisième matériau en caoutchouc,
iv) une bande de roulement (18) située radialement à l'extérieur par rapport au bandage spiralé (16),
v) un fil électriquement conducteur (20),
le fil électriquement conducteur (20) entrant en contact par sections avec la surface située radialement à l'intérieur du bandage spiralé (16) et entrant en contact par sections avec la surface située radialement à l'extérieur du bandage spiralé (16), le fil électriquement conducteur (20) s'étendant au moins sur un emplacement à travers le bandage spiralé (16), **caractérisé en ce que**
par rapport à la direction axiale du pneumatique (10) de véhicule, plus de 80 % de la longueur du fil électriquement conducteur (20) étant disposée dans la zone centrale du pneumatique (10) de véhicule, la zone centrale étant située dans la plage de 0,2*B à 0,8*B, B étant la largeur du bandage spiralé (16) dans la direction axiale.

2. Pneumatique (10) de véhicule selon la revendication 1, le fil électriquement conducteur (20) entrant en contact, par rapport à sa direction longitudinale, en alternance à maintes reprises d'abord avec la surface située radialement à l'intérieur du bandage spiralé (16) puis entrant en contact avec la surface située radialement à l'extérieur du bandage spiralé (16).

3. Pneumatique (10) de véhicule selon l'une des revendications 1 à 2, le fil électriquement conducteur (20) présentant dans la vue de dessus à partir de la direction radiale le long de la direction périphérique un profil en zigzag ou en méandres.

4. Pneumatique (10) de véhicule selon l'une des revendications 1 à 3, le fil électriquement conducteur (20) comprenant au moins un filament textile.

5. Pneumatique (10) de véhicule selon l'une des revendications 1 à 4, le fil électriquement conducteur (20) comprenant un revêtement avec un matériau électriquement conducteur et/ou étant imprégné d'un matériau électriquement conducteur.

6. Procédé de fabrication d'un pneumatique (10) de véhicule selon l'une des revendications 1 à 5, comprenant la fabrication d'une ébauche de pneumatique de véhicule, comprenant les étapes de procédé :
a) fabrication ou fourniture d'une ébauche de carcasse de pneu, comprenant au moins un premier élément de renfort intégré dans un premier composé de caoutchouc vulcanisable ;
b) disposition d'une ébauche de couche de ceinture, comprenant au moins un deuxième élément de renfort intégré dans un deuxième composé de caoutchouc vulcanisable, situé radialement à l'extérieur de l'ébauche de carcasse de pneu,
c) application d'un matériau spiralé, comprenant au moins un troisième élément de renfort intégré dans un troisième composé de caoutchouc vulcanisable, pour produire une ébauche de bandage spiralé située radialement à l'extérieur par rapport à l'ébauche de couche de ceinture,
d) application du fil électriquement conducteur (20), et
e) disposition d'une ébauche de bande de roulement située radialement à l'extérieur par rapport à l'ébauche de bandage spiralé,
ainsi que l'étape de procédé :
e) vulcanisation de l'ébauche de pneumatique de véhicule pour préserver le pneumatique (10) de véhicule ;
les étapes c) et d) de procédé étant réalisées de telle sorte que le matériau spiralé est appliqué en partie radialement au-dessus du fil électriquement conducteur (20), et que le fil électriquement conducteur (20) est appliqué en partie radialement au-dessus du matériau spiralé et que le fil électriquement conducteur (20) est guidé de part en part au moins sur un emplacement entre deux spires du matériau spiralé,
**caractérisé en ce que** les étapes c) et d) de procédé sont réalisées au moins en partie en même temps.

7. Procédé selon la revendication 6, l'application du fil électriquement conducteur étant effectuée par bobinage ou enroulement.

8. Procédé selon la revendication 7, le fil électriquement conducteur étant appliqué par une tête de bobinage disposée sur le tambour de construction de pneu, la tête de bobinage comprenant une tête de bobinage pouvant effectuer des coulissements en va-et-vient dans la direction axiale.
